# EUROPÄISCHE PATENTSCHRIFT

(11) **EP 2 209 673 B1**
(45) Veröffentlichungstag und Bekanntmachung des Hinweises auf die Patenterteilung: **21.01.2015**
(21) Anmeldenummer: 08840758.0
(22) Anmeldetag: 07.10.2008
(51) Int. Cl.: B60R 22/26, B60N 2/427, B60N 2/433

(54) **FAHRZEUGSITZ UND SICHERHEITSGURTSYSTEM**
VEHICLE SEAT AND SEAT BELT SYSTEM
SIÈGE DE VÉHICULE ET SYSTÈME DE CEINTURE DE SÉCURITÉ

(30) Priorität: 12.10.2007 DE 102007049291
(43) Veröffentlichungstag der Anmeldung: 28.07.2010
(73) Patentinhaber: Johnson Controls GmbH, 51399 Burscheid (DE)
(72) Erfinder: WERNER, Hans-Georg, 40764 Langenfeld (DE); THUNISSEN, Jan, NL-5861 DD Wanssum (NL)
(74) Vertreter: Schwöbel, Thilo K.
(86) Internationale Anmeldenummer: PCT/EP2008/008443
(87) Internationale Veröffentlichungsnummer: WO 2009/049793

(56) Entgegenhaltungen:
- DE-A1- 3 216 015
- DE-A1- 3 243 550
- DE-A1- 3 642 349
- DE-A1- 10 041 827

## Beschreibung

Die Erfindung betrifft einen Fahrzeugsitz und ein Sicherheitsgurtsystem, insbesondere für Kraftfahrzeuge.

Gängige Sicherheitsgurte sind mit einem Endbeschlag versehen, der an einem Befestigungspunkt mittelbar oder unmittelbar mit der Fahrzeugkarosserie verbunden ist. über diesen Befestigungspunkt wird die Zugkraft im Gurt auf die Fahrzeugkarosserie übertragen.

Bei einigen Gurtsystemen ist der Endbeschlag an der B-Säule im Bereich des Türschwellers fixiert. Bei anderen Gurtsystemen, wie beispielsweis in der Druckschriften EP 0 818 371 A1 oder DE 698 25 698 T2 offenbart, ist ein mit einem Beckengurtabschnitt verbundener Endbeschlag am Fahrzeugsitz befestigt. Die letzte Lösung hat den Vorteil, dass der Befestigungspunkt des Endbeschlages bei einer Sitzverstellung unter Beibehaltung der Richtung, unter welcher der Beckengurtabschnitt zum Sitz orientiert ist, mit dem Sitz mitbewegt wird. Nachteilig an der zuletzt genannten Lösung ist Jedoch, dass im Crashfall erhebliche Kräfte durch den Fahrzeuginsassen über den Sicherheitsgurt auf den Fahrzeugsitz übertragen werden, wodurch es leicht zu einer den Schutz des Fahrzeuginsassen mindernden Deformation des Fahrzeugsitzes kommen kann.

Dokument DE 3642349 A1 beschreibt die Merkmale des Oberbegriffs des Anspruchs 1.

Ausgehend von diesem Stand der Technik besteht die Aufgabe der Erfindung darin, ein Sicherheitsgurtsystem bereitzustellen, das den oben genannten Nachteil nicht aufweist und das einen im Vergleich zum Stand der Technik verbesserten Schutz des Fahrzeuginsassen bietet.

Die Aufgabe wird mit einem Fahrzeugsitz, insbesondere für ein Kraftfahrzeug, gelost, wobei der Fahrzeugsitz ein Sitzteil, eine Verstelleinrichtung zur Einstellung der Höhe und/oder der Neigung des Sitzteils relativ zu einer Sitzschiene und einen mit dem Sitzteil relativ zur Sitzschiene bewegbaren Befestigungspunkt für einen Sicherheitsgurt aufweist, wobei in einer Unfallsituation der Befestigungspunkt mittels einer Rückhalteeinrichtung mit der Sitzschiene und/oder mit einer Fahrzeugskarosserie zur zumindest teilweisen Lastaufnahme durch die Rückhalteeinrichtung verrastbar ist, wobei ferner die Rückhalteeinrichtung in einer normalen Benutzungssituation zwischen einem ersten sitzteilfesten Anlenkpunkt und einem zweiten sitzschienenfesten oder karosseriefesten zweiten Anlenkpunkt in ihrer Länge in Abhängigkeit der Einstellung der Verstelleinrichtung änderbar ist. Ein erfinderischer Grundgedanke kann darin gesehen werden, dass am Sicherheitsgurtsystem eine letztlich von der Karosserie gehaltene Rückhalteeinrichtung bereitgestellt wird, die im Crashfall ein über den Gurt durch den negativ beschleunigten Fahrzeuginsassen mit Zugkraft beaufschlagtes Gurtbefestigungsorgan (insbesondere ein Gurtschloss eines Dreipunkt-Fahrzeugsicherheitsgurtes, welches direkt oder indirekt an dem mit dem Sitzteil mitbewegten Befestigungspunkt angebunden ist) zurückhält, das den Gurt mit dem Sitz verbindet. Die Rückhalteeinrichtung ist dabei so ausgelegt, dass sie bei normalem Gebrauch eine Bewegung des Gurtbefestigungsorgans bezüglich der Karosserie bzw. der Sitzschiene erlaubt.

Gemäß einer bevorzugten Ausgestaltung der Erfindung umfasst die Rückhalteeinrichtung wenigstens zwei im Prinzip starre Teile, die bei normalem Gebrauch relativ gegeneinander verschiebbar, insbesondere ineinander teleskopierbar sind. Die Rückhalteeinrichtung ist mit Blockiermitteln (bzw. Verrastmitteln) versehen, die im Crashfall unter dem Einfluss der am Gurtbefestigungsorgan angreifenden Zugkraft wirksam werden, um die Relativbewegung der Teile zueinander zu blockieren.

Gemäß der Erfindung ist vorgesehen dass der Befestigungspunkt an der Rückhalteeinrichtung zwischen dem ersten und dem zweiten Anlenkpunkt bzw. dass die Wirkrichtung einer in einer Unfallsituation am Befestigungspunkt wirkenden Kraft einen Winkel zur Verbindungsrichtung der Anlenkpunkte aufweist, der im Bereich von 10° bis 170°, bevorzugt im Bereich von 20° bis 160°, besonders bevorzugt im Bereich von 30° bis 150° und ganz besonders bevorzugt im Bereich von 40° bis 140° liegt. Hierdurch ist es erfindungsgemäß möglich, dass in einfacher Weise die beiden Benutzungssituationen (d.h. die normale normale Benutzungssituation und die Unfallsituation) voneinander unterschieden werden, nämlich durch die Richtung der Kraftwirkung auf die Rückhaltevorrichtung. In einer Unfallsituation kommt es durch die zwischen den Anlenkpunkten vorgesehene Anordnung des Befestigungspunktes zu einer Knicklast auf die Rückhaltevorrichtung. Hierdurch wird eine Verrastung bewirkt.

Weiterhin ist besonders bevorzugt, dass die Rückhalteeinrichtung ein äußeres Rohrteil und ein inneres Rohrteil aufweist, wobei die Rohrteile zur Längenänderung der Rückhalteeinrichtung zwischen dem ersten und zweiten Anlenkpunkt relativ zueinander verschiebbar vorgesehen sind, insbesondere teleskopierend verschiebbar vorgesehen sind. Hierdurch kann in einfacher und kostengünstiger Weise eine Verstellbarkeit der Rückhalteeinrichtung in der normalen Benutzungssituation gewährleistet werden.

Ferner ist es erfindungsgemäß auch bevorzugt, dass die Rückhalteeinrichtung in eine einer normalen Benutzungssituation entsprechenden und im wesentlichen koaxialen ersten Anordnung der Rohrteile einstellbar ist und dass die Rückhalteeinrichtung in eine einer Unfallsituation entsprechenden und im wesentlichen zueinander verkippten zweiten Anordnung der Rohrteile einstellbar ist, wobei insbesondere die Länge der Rückhalteeinrichtung bei einer im wesentlichen koaxialen ersten Anordnung der Rohrteile änderbar ist und wobei die Rohrteile bei einer zueinander verkippten zweiten Anordnung verrastet vorgesehen sind.

Weiterhin ist es bevorzugt, dass die Rückhalteeinrichtung ein Federelement aufweist, wobei das Federelement zur Einstellung der Rückhalteeinrichtung in die erste Anordnung der Rohrteile vorgespannt vorgesehen ist. Hierdurch kann in besonders einfacher Weise eine leichte und geräuschfreie oder geräuschreduzierte Verstellbarkeit in der normalen Benutzungssituation gewährleistet werden.

Erfindungsgemäß ist ferner auch bevorzugt, dass das äußere Rohrteil eine äußere Verzahnung und das innere Rohrteil ein innere Verzahnung aufweist, wobei bei der ersten Anordnung der Rohrteile die Verzahnungen außer Eingriff vorgesehen sind und wobei bei der zweiten Anordnung der Rohrteile die Verzahnungen in Eingriff miteinander vorgesehen sind.

Ein weiterer Gegenstand der vorliegenden Erfindung betrifft ein Sicherheitsgurtsystem für einen Dreipunkt-Fahrzeugsicherheitsgurt zur Verwendung mit einem Fahrzeugsitz nach einem der vorhergehenden Ansprüchen, wobei der mit dem Sitzteil relativ zur Sitzschiene bewegbare Befestigungspunkt für die Befestigung eines Gurtschlosses vorgesehen ist.

Im Folgenden wird eine rein beispielhaft aufzufassende Ausführungsfarre unter Bezugnahme auf die beigefügten Zeichnungen beschrieben.

Es zeigen:
- **Figur 1**: eine Seitenansicht eines mit einem erfindungsgemäß ausgestalteten Gurthaltesystem versehenen Fahrzeugsitzes; in schematischer, teilweiser Darstellung,
- **Figur 2**: die Anordnung von Figur1, mit abgesenktem und nach hinten verlagerten Sitzteil; und
- **Figur 3**: ein Detail von Figur 2 mit einem Schnitt entlang der Längsachse durch eine Rückhalteinrichtung.

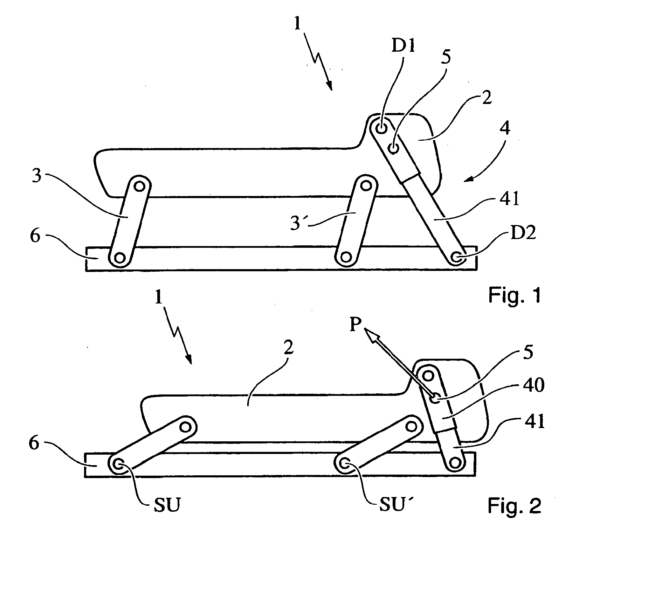

Figur 1 zeigt in schematischer, teilweiser Darstellung eine Seitenansicht eines Fahrzeugsitzes 1, an dem ein erfindungsgemäß ausgestaltetes Gurthaltesystem vorgesehen ist.

Das Sitzteil 2 des Fahrzeugsitzes 1 stützt sich über Lagerhebel 3, 3' an einer Sitzschiene 6 ab, die sieh entlang des Fahrzeugkarosserie-Bodens in Längsrichtung des Fahrzeuges erstreckt. Am Fahrzeugsitz 1 ist eine Rückhalteeinrichtung 4 vorgesehen, die ein äußeres Rohrteil 40 und ein inneres Rohrteil 41 aufweist, das im äußeren Rohrteil 40 angeordnet ist. Das innere Rohrteil 41 und das äußere Rohrteil 40 sind bei normalem Gebrauch gegeneinander teleskopisch verschiebbar gelagert. Das innere Rohrteil 41 befindet sich in Figur 1 in einer ausgefahrenen Stellung.

Der (nicht dargestellte) Sicherheitsgurt ist an einem Gurtbefestigungspunkt 5 bzw. an einem Befestigungspunkt 5 am äußeren Rohrteil 40 befestigt, das um eine horizontale, quer zum Fahrzeugsitz verlaufende, geometrische erste Drehachse D1 am Fahrzeugsitz 1 angelenkt ist.

Das innere Rohrteil 41 (welches im Fall des dargestellten Ausführungsbeispiels gleichzeitig das untere Rohrteil 41 ist) ist um eine horizontale, quer zum Fahrzeugsitz 1 verlaufende, geometrische zweite Drehachse D2 drehbar an der Sitzschiene 6 angelenkt. Die Sitzschiene 6 ist insbesondere starr mit der Karosserie verbunden. Gegebenenfalls ist die Sitzschiene 6 (und damit der Fahrzeugsitz 1) jedoch in ihrer Längsrichtung längsverschieblich mit einer weiteren Sitzschiene (nicht dargestellt) verbunden bzw. der Fahrzeugsitz 1 ist längsverschieblich vorgesehen, jedoch ist die zweite Drehachse D2 an der karosseriefesten Sitzschiene angelenkt.

Figur 2 zeigt die Anordnung von Figur 1, mit in eine andere Position überführtem Fahrzeugsitz 1. Das Sitzteil 2 wurde von einem Nutzer in eine dessen individuellen Ansprüchen entsprechende, ergonomisch günstige Position verstellt und hierzu von der in Figur 1 gezeigten Position nach hinten verlagert und gleichzeitig abgesenkt. Die Verstellbewegung des Sitzteiles 2 wurde auf die jeweils einerseits an der Sitzschiene 6 und andererseits am Sitzteil 2 angelenkten Lagerhebel 3, 3' übertragen, so dass die Lagerhebel 3, 3' eine Schwenkbewegung um untere Schwenkachsen SU, SU' vollzogen haben.

Die Verstellbewegung des Sitzteiles 2 wurde ferner auf das äußere Rohrteil 40 übertragen, wodurch das innere Rohrteil 41 und das äußere Rohrteil 40 gegeneinander teleskopisch verschoben wurden, und sich das innere Rohrteil 41 jetzt in einer eingefahrenen Stellung befindet.

Der Gurtbefestigungspunkt 5 bzw. Befestigungspunkt 5 ist mit dem Sitzteil 2 mitgewandert.

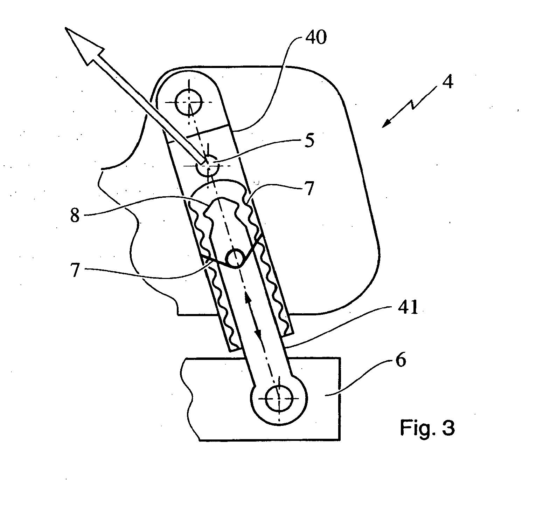

Figur 3 zeigt ein Detail von Figur 2 mit einem Schnitt entlang der Längsachse durch die Rückhalteeinrichtung 4.

Das äußere Rohrteil 40 ist mit einer (nach innen weisenden) äußeren Verzahnung 7 versehen und das innere Rohrteil 41 ist mit einer (nach außen weisenden) inneren Verzahnung 8 versehen, die auf die äußere Verzahnung 7 ausgerichtet ist.

In der in Figur 3 gezeigten (und nachfolgend auch erste Anordnung der Rohrteile 40, 41 bzw. der Rückhalteeinrichtung 4 genannten) Ruhelage der Rückhalteeinrichtung 4 sind das äußere Rohrteil 40 und das innere Rohrteil 41 koaxial zueinander angeordnet und die äußere Verzahnung 7 befindet sich außerhalb des Wirkungsbereiches der inneren Verzahnung B.

Mithilfe eines Federelementes 9 werden das äußere Rohrteil 40 und das innere Rohrteil 41 relativ zueinander In der angesprochenen Ruhelage (erste Anordnung) gehalten, so dass das innere Rohrteil 41 und das äußere Rohrteil 40 gegeneinander teleskopisch verschoben werden können.

Eine im Crashfall im Gurtbefestigungspunkt b am äußeren Rohrteil 40 angreifende Zugkraft (deren Wirkrichtung durch den Pfeil P angedeutet ist) bewirkt eine Verschiebung des äusseren Rohrteils 40 in radialer Richtung und/oder ein Verkippen des äußeren Rohrteils 40 relativ zum inneren Rohrteil 41, so dass die Rückhalteeinrichtung 4 in eine nachfolgend auch als zweite Anordnung der Rohrteile 40, 41 bzw. der Rückhalteeinrichtung 4 bezeichnete Einstellung gelangt. Infolge dieser Bewegung des äußeren Rohrteils 40 relativ zum inneren Rohrteil 41 gelangen die äußere Verzahnung 7 und die innere Verzahnung 8 miteinander In Eingriff, wodurch das äußere Rohrteil 40 und das innere Rohrteil 41 gegen eine (weitere) Bewegung zueinander gesperrt werden. Die im Gurtbefestigungspunkt 5 am äußeren Rohrteil 40 angreifenden Zugkräfte können nun über einen Kraftpfad, der durch das äußere Rohrteil 40 und das innere Rohrteil 41 verläuft, zur Sitzschiene 6 und von der Sitzschiene 6 letztlich In die Karosserie eingeleitet werden.

### Bezugszeichenliste

- 1: Fahrzeugsitz
- 2: Sitzteil
- 3, 3': Lagerhebel
- 4: Rückhalteeinrichtung
- 5: Gurtbefestigungspunkt / Befestigungspunkt
- 6: Sitzschiene
- 7: äußere Verzahnung
- 8: innere Verzahnung
- 9: Federelement
- 40: äußeres Rohrteil
- 41: inneres Rohrteil
- SU, SU': untere Schwenkachsen
- D1: erste Anlenkpunkt / erste Drehachse
- D2: zweiter Anlenkpunkt / zweite Drehachse

## Patentansprüche

1. Fahrzeugsitz (1), insbesondere für ein Kraftfahrzeug, mit einem Sitzteil (2), mit einer Verstelleinrichtung (3, 3') zur Einstellung der Höhe und/oder der Neigung des Sitzteils (2) relativ zu einer Sitzschiene (6) und mit einem mit dem Sitzteil (2) relativ zur Sitzschiene (6) bewegbaren Befestigungspunkt (5) für einen Sicherheitsgurt, wobei in einer Unfallsituation der Befestigungspunkt (5) mittels einer Rückhalteeinrichtung (4) mit der Sitzschiene (6) und/oder mit einer Fahrzeugskarosserie zur zumindest teilweisen Lastaufnahme durch die Rückhalteeinrichtung (4) verrastet wird, wobei in einer normalen Benutzungssituation die Rückhalteeinrichtung (4) zwischen einem ersten sitzteilfesten Anlenkpunkt (D1) und einem zweiten sitzschienenfesten oder karosserlefesten zweiten Anlenkpunkt (D2) in ihrer Länge in Abhängigkeit der Einstellung der Verstelleinrichtung (3, 3') änderbar ist, **dadurch gekennzeichnet, dass** die Wirkrichtung einer in einer Unfallsituation am Befestigungspunkt (5) wirkenden Kraft (P) einen Winkel zur Verbindungsrichtung der Anlenkpunkte (D1, D2) aufweist, der im Bereich von 10° bis 170°, bevorzugt im Bereich von 20° bis 160°, besonders bevorzugt im Bereich von 30° bis 150° und ganz besonders bevorzugt im Bereich von 40° bis 140° liegt.

2. Fahrzeugsitz (1) nach Anspruch 1, **dadurch gekennzeichnet, dass** der Befestigungspunkt (5) an der Rückhalteeinrichtung (4) zwischen dem ersten und dem zweiten Anlenkpunkt (D1, D2) vorgesehen ist.

3. Fahrzeugsitz (1) nach einem der vorhergehenden Ansprüche, **dadurch gekennzeichnet, dass** die Rückhalteeinrichtung (4) ein äußeres Rohrteil (40) und ein inneres Rohrtell (41) aufweist, wobei die Rohrteile (40, 41) zur Längenänderung der Rückhalteeinrichtung (4) zwischen dem ersten und zweiten Anlenkpunkt (D1, D2) relativ zueinander verschiebbar vorgesehen sind, insbesondere teleskopierend verschiebbar vorgesehen sind.

4. Fahrzeugsitz (1) nach Anspruch 3, **dadurch gekennzeichnet, dass** die Rückhalteeinrichtung (4) in eine einer normalen Benutzungssituation entsprechenden und im wesentlichen koaxialen ersten Anordnung der Rohrteile (40, 41) einstellbar ist und dass die Rückhafteeinrichtung (4) in eine einer Unfallsituation entsprechenden und im wesentlichen zueinander verkippten zweiten Anordnung der Rohrteile (40, 41) einstellbar ist.

5. Fahrzeugsitz (1) nach Anspruch 3 oder Anspruch 4, **dadurch gekennzeichnet, dass** die Länge der Rückhalteeinrichtung (4) bei einer im wesentlichen koaxialen ersten Anordnung der Rohrteile (40, 41) änderbar ist und dass die Rohrteile (40, 41) bei einer zueinander verkippten zweiten Anordnung verrastet vorgesehen sind.

6. Fahrzeugsitz (1) nach einem der Ansprüche 3, 4 oder 5, **dadurch gekennzeichnet, dass** die Rückhalteeinrichtung (4) ein Federelement (9) aufweist, wobei das Federelement (9) zur Einstellung der Rückhalteeinrichtung (4) in die erste Anordnung der Rohrteile (40, 41) vorgespannt vorgesehen ist.

7. Fahrzeugsitz (1) nach einem der Ansprüche 3, 4, 5 oder 6, **dadurch gekennzeichnet, dass** das äußere Rohrtell (40) eine äußere Verzahnung (7) und das innere Rohrteil (41) ein innere Verzahnung (8) aufweist, wobei bei der ersten Anordnung der Rohrteile (40, 41) die Verzahnungen (7, 8) außer Eingriff vorgesehen sind und wobei bei der zweiten Anordnung der Rohrteile (40, 41) die Verzahnungen (7, 8) in Eingriff miteinander vorgesehen sind.

8. Sicherheitsgurtsystem für einen Dreipunkt-Fahrzeugsicherheitsgurt zur Verwendung mit einem Fahrzeugsitz (1) nach einem der vorhergehenden Ansprüchen, wobei der mit dem Sitzteil (2) relativ zur Sitzschiene (6) bewegbare Befestigungspunkt (5) für die Befestigung eines Gurtschlosses vorgesehen ist.

## Claims

1. Vehicle seat (1), in particular for a motor vehicle, with a seat part (2), with an adjustment device (3, 3') for setting the height and/or the inclination of the seat part (2) relative to a seat rail (6) and with a fastening point (5) for a seat belt movable with the seat part (2) relative to the seat rail (6), wherein, in an accident situation, the fastening point (5) is locked in position with the seat rail (6) and/or with a vehicle bodywork by means of a restraint device (4) for at least partial load absorption by the restraint device (4) wherein, in a normal usage situation, the restraint device (4) can be varied in its length between a first fixed seat part linkage point (D1) and a second seat rail-fixed or bodywork-fixed second linkage point (D2) depending on the setting of the adjustment device (3, 3'), **characterised in that** the effective direction of a force (P) acting on the fastening point (5) in an accident situation has an angle to the attachment direction of the linkage points (D1, D2) which is in the range from 10° to 170°, preferably in the range from 20° to 160^{s}, particularly preferably in the range from 30° to 150°, and quite particularly preferably in the range from 40° to 140°.

2. Vehicle seat (1) in accordance with claim 1, **characterised in that** the fastening point (5) on the retention device (4) is provided between the first and the second linkage point (D1, D2).

3. Vehicle seat (1) in accordance with one of the preceding claims, **characterised in that** the retention device (4) has an outer tube part (40) and an inner tube part (41), wherein the tube parts (40, 41) are provided to be displaceable relative to one another between the first and second linkage points (D1, D2), for varying the length of the retention device (4), in particular are telescopically displaceable.

4. Vehicle seat (1) in accordance with claim 3, **characterised in that** the retention device (4) is adjustable corresponding to a normal usage situation and in an essentially coaxial arrangement of the tube parts (40, 41) and that the retention device (4) is adjustable corresponding to an accident situation and in a second arrangement in which the tube parts (40, 41) are tilted in relation to one another.

5. Vehicle seat (1) in accordance with claim 3 or claim 4, **characterised in that** the length of the retention device (4) is variable in an essentially, axial first arrangement of the tube parts (40, 41) and that the tube parts (40, 41) are provided to be locked together in a second arrangement in which they are tilted in relation to one another.

6. Vehicle seat (1) in accordance with one of the claims 3, 4 or 5, **characterised in that** the retention device (4) has a spring member (9), wherein the spring member (9) is provided to be preloaded for adjustment of the retention device (4) in the first arrangement of the tube parts (40, 41).

7. Vehicle seat (1) in accordance with one of the claims 3, 4, 5 or 6, **characterised in that** the outer tube part (40) has an outer toothing (7) and the inner tube part (41) has an inner toothing (8) wherein, in the first arrangement of the tube parts (40, 41), the toothings (7, 8) are disengaged and wherein, in the second arrangement of the tube parts (40, 41), the toothings (7, 8) are meshed together.

8. Safety belt system for a three-point vehicle safety belt for use with a vehicle seat (1) in accordance with one of the preceding claims, wherein the fastening point (5) for a seat belt movable with the seat part (2) relative to the seat rail (6) is provided for fastening the belt buckle.

## Revendications

1. Siège de véhicule (1), en particulier pour véhicules automobile, comportant un élément siège (2), un dispositif de réglage (3, 3') pour régler la hauteur et/ou l'inclinaison de l'élément siège (2) par rapport à un rail de siège (6) et un point de fixation (5) mobile avec l'élément siège (2) par rapport au rail de siège (6) pour une ceinture de sécurité, dans lequel, en situation d'accident, le point de fixation (5) s'enclenche au moyen d'un dispositif de retenue (4) dans le rail de siège (6) et/ou dans une carrosserie de véhicule pour une absorption au moins partielle de la charge par le dispositif de retenue (4), dans lequel, en situation normale d'utilisation, le dispositif de retenue (4) peut changer de longueur entre un premier point d'articulation fixe sur l'élément siège (D1) et un second point d'articulation fixe sur le rail de siège ou fixe sur la carrosserie (D2) en fonction du paramétrage du dispositif de réglage (3, 3'), **caractérisé en ce que** le sens d'action d'une force (P) agissant en situation d'accident au niveau du point de fixation (5) décrit par rapport au sens de raccordement des points d'articulation (D1, D2) un angle qui se situe dans la fourchette de 10° à 170°, de préférence dans la fourchette de 20° à 160°, très préférentiellement dans la fourchette de 30° bis 150° et tout à fait préférentiellement dans la fourchette de 40° à 140°.

2. Siège de véhicule (1) selon la revendication 1, **caractérisé en ce que** le point de fixation (5) est prévu au niveau du dispositif de retenue (4) entre les premier et le second point d'articulation (D1, D2).

3. Siège de véhicule (1) selon l'une quelconque des revendications précédentes, **caractérisé en ce que** le dispositif de retenue (4) présente une pièce tubulaire extérieure (40) et une pièce tubulaire intérieure (41), les pièces tubulaires (40, 41) étant prévues pour modifier la longueur du dispositif de retenue (4) entre le premier et le second point d'articulation (D1, D2) l'un par rapport à l'autre de manière mobile, en particulier par télescopage mobile.

4. Siège de véhicule (1) selon la revendication 3, **caractérisé en ce que** le dispositif de retenue (4) est réglable dans une première disposition correspondant à une situation d'utilisation normale et sensiblement coaxiale des pièces tubulaires (40,41) et que le dispositif de retenue (4) est réglable dans une seconde disposition correspondant à une situation d'accident et sensiblement basculée l'une par rapport à l'autre des pièces tubulaires (40, 41).

5. Siège de véhicule (1) selon la revendication 3 ou la revendication 4, **caractérisé en ce que** la longueur du dispositif de retenue (4) est modifiable en cas de première disposition sensiblement coaxiale des pièces tubulaires (40, 41) et que les pièces tubulaires (40, 41) sont conçues pour s'enclencher en cas de seconde disposition basculée l'une par rapport à l'autre.

6. Siège de véhicule (1) selon l'une des revendications 3, 4 ou 5, **caractérisé en ce que** le dispositif de retenue (4) présente un élément à ressort (9), l'élément à ressort (9) étant conçu pour régler le dispositif de retenue (4) précontraint dans la première disposition des pièces tubulaires (40, 41).

7. Siège de véhicule (1) selon l'une des revendications 3, 4, 5 ou 6, **caractérisé en ce que** la pièce tubulaire extérieure (40) présente une denture extérieure (7) et la pièce tubulaire intérieure (41) une denture intérieure (8), dans lequel, en cas de première disposition des pièces tubulaires (40, 41), les dentures (7, 8) sont conçues pour être hors prise et dans lequel, en cas de seconde disposition des pièces tubulaires (40, 41), les dentures (7, 8) sont conçues pour être en prise l'une avec l'autre.

8. Système de ceinture de sécurité pour ceinture de sécurité à trois points de véhicule s'utilisant avec un siège de véhicule (1) selon l'une quelconque des revendications précédentes, dans lequel le point de fixation (5) mobile par rapport au rail de siège (6) avec l'élément siège (2) est conçu pour la fixation d'une serrure de ceinture.
